# EUROPÄISCHE PATENTSCHRIFT

(11) **EP 1 026 497 B1**
(45) Veröffentlichungstag und Bekanntmachung des Hinweises auf die Patenterteilung: **08.12.2004**
(21) Anmeldenummer: 99119975.3
(22) Anmeldetag: 12.10.1999
(51) Int. Cl.: G01N 21/51

(54) **Optoelektronischer Sensor**
Optoelectronic sensor
Détecteur optoélectronique

(30) Priorität: 06.02.1999 DE 19904880
(43) Veröffentlichungstag der Anmeldung: 09.08.2000
(73) Patentinhaber: Endress + Hauser Conducta Gesellschaft für Mess- und Regeltechnik mbH + Co.KG., D-70839 Gerlingen (DE)
(72) Erfinder: Stenkamp, Bernd, Dr., 70180 Stuttgart (DE)
(74) Vertreter: Dreiss, Fuhlendorf, Steimle & Becker

(56) Entgegenhaltungen:
- EP-A- 0 634 645
- PATENT ABSTRACTS OF JAPAN vol. 008, no. 033 (P-254), 14. Februar 1984 (1984-02-14) & JP 58 187836 A (MEIDENSHA KK), 2. November 1983 (1983-11-02)

## Beschreibung

Die Erfindung betrifft einen optoelektronischen Sensor, insbesondere zur Trübungsmessung in einem Medium, mit den Merkmalen des Oberbegriffs des Anspruchs 1. Ein derartiger Sensor ist beispielsweise bekannt aus EP-A-0 634 645. Ferner betrifft die Erfindung ein Verfahren zum Betreiben eines optoelektronischen Sensors.

Derartige Sensoren, werden zur Messung von Eigenschaften fluider Medien, im besonderen in der Lebensmittel- und chemischen Industrie eingesetzt und dienen oft zur kontinuierlichen Messung in der Prozesstechnik. Auf den vorstehend erwähnten Gebieten sind die Anforderungen an die Temperaturbeständigkeit und die Widerstandskraft gegen Druck sowie Beständigkeit gegen chemisch agressive Stoffe von besonderer Bedeutung. Dies ergibt sich bspw. aus der Notwendigkeit einen in der Lebensmittelindustrie und chemischen Industrie einzusetzenden Sensor reinigen und auch sterilisieren zu können.

Ein optoelektronischen Sensoren inhärentes Problem besteht in der optischen Isolierung des Sendekanals und des Empfangskanals voneinander. Es muß unter allen Umständen verhindert werden, dass Lichtwellen, welche den Sendekanal verlassen und eine entsprechende Modulation (Kennung) aufweisen, um von der Auswerteeinheit erfaßt zu werden, direkt in den Empfangskanal gelangen, ohne mit dem zu messenden Medium in Wechelwirkung zu treten, da andernfalls eine Messung des Mediums verfälscht würde bzw. erst gar nicht sinnvoll durchführbar wäre.

Aus JP-A-58187836 ist ein optoelektonischer Sensor mit einem gemeinsamen Fenster für Sender und Empfänger bekannt. Der Sender sendet aber keinen gerichteteten Strahl in das Fenster. Durch einen Spalt zwischen Fenster und Empfänger soll der Anteil des an der äußeren Fenstergrenzfläche zum Medium zurückreflektierten und zum Empfänger gelangenden Lichts reduziert werden.

Für den Sendekanal und für den Empfangskanal kann jeweils ein eigener Gehäuseaufbau verwendet werden, was den Sensor als Ganzes komplex und aufwendig gestaltet. Es ist stattdessen auch denkbar, Sendekanal und Empfangskanal innerhalb eines Gehäuses vorzusehen und durch optisch undurchlässige Materialien voneinander zu trennen. Während dies im Inneren eines Sensorgehäuses verhältnismäßig leicht zur verwirklichen ist, gestaltet es sich an der Schnittstelle oder Austrittsstelle in das zu messende Medium als schwierig. Es müssen zwei voneinander separate Fenster aus einem optisch transparenten Material vorgesehen werden, was mit einem dementsprechend hohen Aufwand für die Abdichtung verbunden ist.

Hiervon ausgehend liegt der vorliegenden Erfindung die Aufgabe zugrunde, einen optoelektronischen Sensor der eingangs beschriebenen Art sowie ein Verfahren zum Betreiben eines solchen Sensors dahingehend zu verbessern, dass er kompakter und kostengünstiger herstellbar ist und dass der vorstehend erwähnte Aufwand zur optischen Isolierung von Sendekanal und Empfangskanal voneinander sowie der Aufwand zur Abdichtung des Sensorgehäuses gegenüber dem zu messenden Medium herabgesetzt wird.

Diese Aufgabe wird durch einen Sensor mit den Merkmalen des Anspruchs 1 gelöst.

Der Einfallswinkel für den Sendelichtstrahl wird also erfindungsgemäß so gewählt, dass an der äußeren Grenzfläche in das Innere des Fensters reflektiertes Licht des Senders unter einem Winkel auf die innere Grenzfläche trifft, der größer als der Totalreflektionswinkel ist.

Das Licht wird reflektiert und gelangt somit nicht in den Empfangskanal.

Die weitere Aufgabe wird durch ein Verfahren mit den Merkmalen des Anspruchs 8 gelöst.

Durch die erfindungsgemäße Lösung ist es möglich für den Sendekanal und einen oder mehrere Empfangskanäle ein und dieselbe Auskoppelstelle in Form des Fensters zu verwenden, ohne dass zwischen Empfangs- und Sendekanal optisch undurchlässige Materialien in Form von Wänden oder dgl. vorgesehen werden müssen. Eine Einstrahlung von Lichtwellen des Sendekanals, welche nicht in das Messmedium austreten, sondern an der Grenzfläche zum Medium zurückreflektiert werden, in den Empfangskanal wird dadurch ausgeschlossen, dass diese Lichtwellen an der inneren sendekanalseitigen Grenzfläche des Fensters zum Sensorinneren total reflektiert werden. Um dies zu ermöglichen, ist an dieser inneren Grenzfläche, also im Sensorinneren, ein optisch dünneres Medium, vorzugsweise Luft oder ein anderes Gas vorgesehen. Die unter einem Einfallswinkel der größer ist als der Grenzwinkel der Totalreflektion auf diese innere Grenzfläche auftreffenden Lichtwellen werden erneut in das Innere des Fensters in Richtung auf die äußere Grenzfläche reflektiert. Es erweist sich als besonders vorteilhaft, wenn das Fenster eine planparallele Platte umfaßt, da solchenfalls der zurückreflektierte Anteil unter dem gleichen Winkel auf die äußere Grenzfläche auftrifft, wie der Primärsendestrahl und daher zum überwiegenden Teil austreten wird. Der erneut in Richtung auf die innere Grenzfläche reflektierte prozentuale Anteil vermag wiederum nicht in Richtung auf das Sensorinnere auszutreten, da die Lichtwellen wieder unter einem Winkel auf die untere Grenzfläche auftreffen, der größer ist als der Grenzwinkel der Totalreflektion.

Lichtwellen, welche nach Wechselwirkung mit dem zu messenden Medium, also bspw. durch Streuung mit ungelöstem Partikelmaterial in einer Flüssigkeit von außen auf die äußere Grenzfläche des Fensters auftreffen und in das optisch transparente Material des Fensters eintreten, werden dann durch die innere Grenzfläche in das Innere des Sensors austreten, wenn sie unter einem Einfallswinkel auftreffen, der geringer ist als der Grenzwinkel der Totalreflektion. Man wird den Sendekanal und damit die erste Achse entlang der sich Lichtwellen innerhalb des Fensters ausbreiten so orientieren, dass das Licht vorzugsweise unter einem Winkel zwischen 45 und 55 Grad zur Lotrechten auf die äußere Grenzfläche trifft. Solchenfalls wird sogenanntes 90°-Streulicht unter einem Winkel auf die innere Grenzfläche auftreffen, der geringer ist als der Grenzwinkel der Totalreflektion (hierbei wurde von einem zu messenden wässrigen Medium und einem optisch transparenten Fenstermaterial in Form von Glas sowie einem optisch dünneren Medium in Form von Luft auf der Innenseite des Fensters ausgegangen).

Es hat sich des Weiteren vorteilhaft erwiesen, wenn die erste Achse bezüglich der äußeren Grenzfläche derart orientiert ist, dass der Einfallswinkel α₂, unter dem an der äußeren Grenzfläche in das Innere des Fensters zurückreflektierte Lichtwellen auf die innere Grenzfläche auftreffen, größer als 42° ist. Ferner hat es sich als zweckmäßig erwiesen wenn der Einfallswinkel α₃, unter dem Lichtwellen, die durch Wechselwirkung mit dem zu messenden Medium in das Fenster eintreten, auf die innere Grenzfläche auftreffen, kleiner als 40°, vorzugsweise kleiner als 34° ist.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Sensors. In der Zeichnung zeigt:
- Figur 1: eine schematische Schnittansicht eines erfindungsgemäßen Sensors zur Trübungsmessung und
- Figur 2: eine Darstellung der optischen Reflektivität an einer Grenzfläche Glas/Luft und Saphir/Luft in Abhängigkeit des Einfallswinkels.

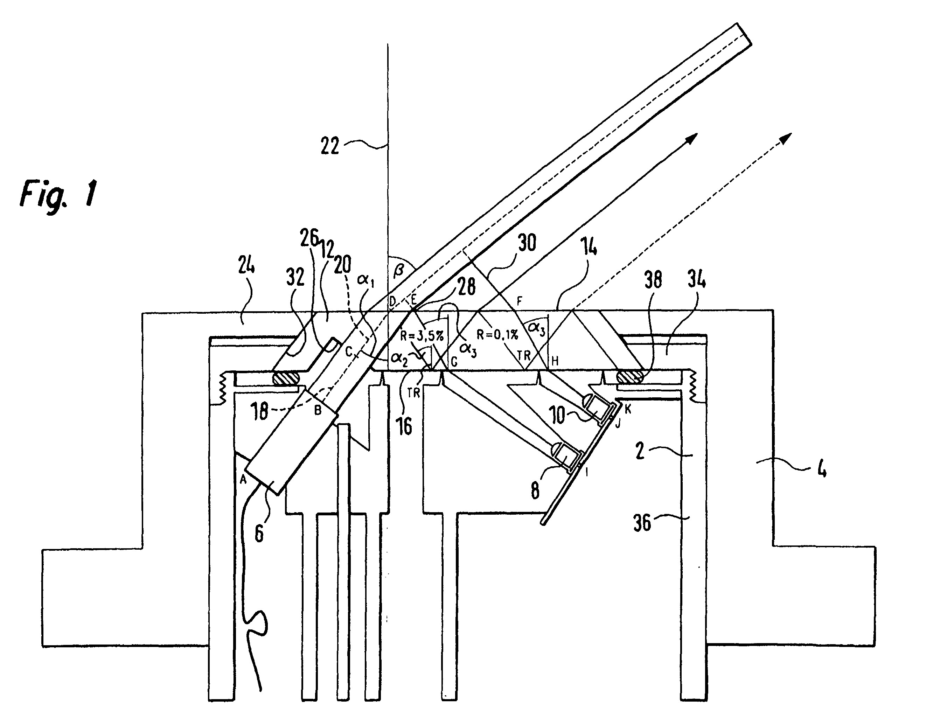

Figur 1 zeigt schematisch einen optoelektronischen Sensor. Dieser umfaßt ein Sensorgehäuse 2, das in einen Montageflansch 4 einsetzbar ist und beispielsweise in der Prozessmeßtechnik in eine Öffnung eines flüssigkeitsbefüllten Behälters eintauchend befestigt werden kann. Der optoelektronische Sensor ist als Trübungssensor ausgebildet, das heißt er mißt an ungelösten Partikeln in einer Flüssigkeit oder einem Gas oder an einer Emulsion diffus gestreutes Licht. Hierzu wird ein Lichtstrahl in das zu messende Medium eingeleitet und das gestreute Licht wird optoelektronisch erfaßt.

Der Sensor umfaßt einen Sendekanal 6 und zwei Empfangskanäle 8, 10, die im selben Gehäuse 2 des Sensors untergebracht sind und durch ein gemeinsames Fenster 12 aus einem optisch transparenten Material gegen das zu messende Medium abgedichtet sind. Dies bedeutet, dass von dem Sendekanal ausgesandte Lichtwellen durch dasselbe Fenster nach außen also in das zu messende Medium austreten, wie an Streuzentren innerhalb des zu messenden Medium gestreutes Licht von außen durch das Fenster hindurch nach innen zu den Empfangskanälen 8, 10 gelangt. Die optische Isolation zwischen ausgesandten Lichtwellen und zu empfangenden Lichtwellen erfolgt durch die geometrische Anordnung bzw. Orientierung der von äußerer und innerer Grenzfläche 14 bzw. 16 des Fensters 12 und von der Orientierung in Ausbreitungsrichtung 18 der vom Sendekanal 6 ausgesandten Lichtwellen zur äußeren Grenzfläche 14, wie sich aus den nachfolgenden Erläuterungen ergeben wird.

Der eine Lichtquelle umfassende Sendekanal 6 ist so orientiert, dass er Lichtwellen in einer vertikalen Ebene in einem Winkel α₁ von ca. 45 Grad zur Lotrechten auf die äußere Grenzfläche 14 des Fensters bzw. Vorrichtungswand 24 aussendet. Diese Lichtwuellen treffen auf einen Abschnitt 26 des Fensters, der so geformt ist, dass er genau senkrecht zur Ausbreitungsrichtung 18 der Lichtwellen verläuft. Diese treten daher ohne Richtungsänderung entlang einer ersten Achse 20 in das Innere des Fensters 12 ein und gelangen unter dem Einfallswinkel α₁ auf die äußere Grenzfläche 14 des Fensters 12 zu dem zu messenden Medium. Die Lichtwellen legen also den Weg B-C-D ohne Richtungsänderung zurück. An der Grenzfläche 14 werden die Lichtwellen beim Übergang in das zu messende dichtere Medium z.B. eine wässrige Lösung von der Lotrechten 22 weggebrochen und treten unter einem Winkel β aus dem Fenster 12 in das zu messende Medium ein, der größer ist als der Einfallswinkel α₁, Wie in der Figur 1 angedeutet, tritt ca. 96,5 % der Intensität in das zu messende Medium aus (bei einem Übergang Glas (n = 1,52) zu Wasser (n = 1,33) bei einem Einfallswinkel α1 von 45°). Die restlichen 3,5 % werden an der Grenzfläche 14 in das Innere des Sensors 12 zurückreflektiert (D-TR). Die Anordnung der inneren Grenzfläche 16, der äußeren Grenzfläche 14 und der Orientierung der ersten Achse 20 sind nun derart, dass die in das Innere des Fensters 12 zurückreflektierten Lichtwellen (D-TR) unter einem Winkel α₂ auf die innere Grenzfläche 16 auftreffen, der größer ist als der Grenzwinkel der Totalreflektion beim Übergang von Glas zu dem angrenzenden optisch dünneren Medium, nämlich Luft. Dies führt dazu, dass die Lichtwellen an der Grenzfläche 16 erneut in das Innere des Fensters 12 zurückreflektiert werden. Beim erneuten Auftreffen auf die äußere Grenzfläche 14 tritt wiederum der überwiegende Teil in das zu messende Medium aus (3,4 %, bei Übergang Glas/Wasser). Ein Rest von 0,1 % der ursprünglichen Intensität wird abermals nach innen reflektiert. Auf diese Weise ist sichergestellt, dass die vom Sendekanal 6 ausgesandten Lichtwellen nicht in den Empfangskanal 8 oder 10 gelangen können, ohne dass es separater Gehäuse oder separater Fenster für Sende- und Empfangskanal und aufwendiger optischer Abschirmmittel bedarf.

In Figur 1 ist ferner sogenanntes 90°-Streulicht in Form von "Strahlen" 28, 30 angedeutet. Diese "Strahlen" treffen in den Punkten E bzw. F auf die äußere Grenzfläche 14 auf und die ihnen zuzuordnenden Lichtwellen treten zum überwiegenden Teil in das optisch transparente Material des Fensters 12 ein. Da dieses das optisch dichtere Medium darstellt, werden die Lichtwellen zur Lotrechten hin gebrochen (E-G bzw. F-H). Die Orientierung der äußeren Grenzfläche 14 und der inneren Grenzfläche 16 sowie die Orientierung der ersten Achse 20 der vom Sendekanal 6 ausgesandten Lichtwellen ist derart, dass dieses 90°-Streulicht unter einem Winkel α₃ auf die innere Grenzfläche 16 auftrifft, der vorzugsweise deutlich geringer ist als der Grenzwinkel der Totalreflektion beim Übergang von optisch transparenten Material des Fensters 12 zum angrenzenden optisch dünneren Medium in Form von Luft. Je kleiner der Winkel α3 desto höher ist die Intensität der in das angrenzende Medium Luft aus dem Fenster 12 austretenden Lichtwellen, welche die Empfangskanäle 8 bzw. 10 erreichen und somit erfaßt werden können (G-I bzw. H-J).

Auf die vorstehend beschriebene Weise ist also eine wirksame optische Trennung des Sendekanals 6 von den Empfangskanälen 8, 10 erreicht.

Man erkennt in Figur 1, dass das Fenster 12 in eine konische Öffnung 32 eines Innengehäuseflanschs 34, welcher über ein Innengewinde auf einen Außengewindeabschnitt eines zylindrischen Innengehäuseteils 36 aufschraubbar ist, eingesetzt ist. Das Fenster 12 selbst ist kegelstumpfförmig ausgebildet mit planparallelen Grenzflächen 14, 16. Durch das Aufschrauben des Flanschs 34 auf das Innengehäuseteil 36 wird das Fenster 12 auf eine Dichtung 38 aufgepreßt. Die so erhaltene Einheit ist in den Montageflansch 4 dichtend so eingesetzt, dass die äußere Grenzfläche 14 des Fensters 12 flächenbündig mit dem äußeren Flanschabluss 24 verläuft.

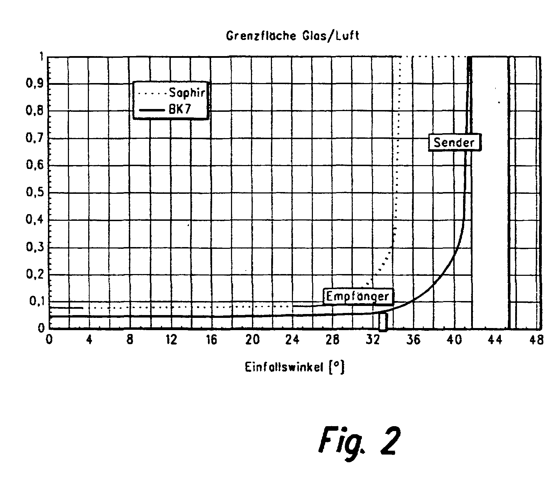

Figur 2 zeigt für zwei optisch transparente Materialien die Reflektivität in Abhängigkeit des Einfallswinkels, und zwar für Saphir und BK7-Glas.

Man erkennt den Einfallswinkelbereich oberhalb von 41, 7 Grad, welcher dem Sendestrahl bzw. der ersten Achse 20, entlang der sich die Lichtwellen des Sendekanals innerhalb des Fensters 12 relativ zur Lotrechten 22 in Richtung auf die äußere Grenzfläche 14 ausbreiten, zugeordnet ist. Innerhalb dieses Bereichs kann einerseits sichergestellt werden, dass die vom Sendekanal 6 ausgesandten Lichtwellen zum Großteil in das zu messende Medium übergehen, und dass andererseits beim Übergang von an der äußeren Grenzfläche 14 reflektiertem Licht an der inneren Grenzfläche 16 (Glas/Luft) keinerlei Intensität nach innen austreten kann, da der Grenzwinkel der Totalreflektion überschritten ist.

Der weitere in Figur 2 angedeutete bevorzugte Winkelbereich um 33 Grad herum ist dem Streulicht zugeordnet. Er liegt unterhalb des Grenzwinkels der Totalreflektion auch für das Material Saphir beim Übergang der Lichtwellen an Grenzfläche Saphir/Luft.

Es versteht sich, dass die vorstehend beschriebene Anordnung mit planparallelen Grenzflächen 14, 16 nicht die einzige erfindungsgemäße Anordnung ist, mit der die beschriebene trennmedienfreie optische Isolation zwischen Sende- und Empfangskanal realisiert werden kann. So wäre es auch möglich, durch eine hiervon abweichende etwa keilförmige oder in sonstiger geeigneter Weise ausgebildeten Gestaltung des Fensters 12 eine Anordnung zu schaffen, mit der sichergestellt werden kann, dass direkt vom Sendekanal 6 ausgesandte Lichtwellen nicht aus dem Fenstermaterial nach innen austreten und in den Empfangskanal 8, 10 gelangen können und dass andererseits Streulicht, also Lichtwellen, welche nach Wechselwirkung mit dem zu messenden Medium wiederum in den Sensor zurückgeleitet und einer Messung bzw. Erfassung zugeführt werden sollen, zu den Empfangskanälen 8, 10 gelangen können.

## Patentansprüche

1. Optoelektronischer Sensor, insbesondere zur Trübungsmessung in einem Medium, mit einem entlang einer ersten Achse (20) Lichtwellen aussendenden Sendekanal (6) und wenigstens einem Empfangskanal (8, 10), der mit dem Medium wechselwirkende Lichtwellen erfasst und mit einer Auswerteeinheit zusammenwirkt, wobei zur Abdichtung des Sendekanals (6) und des wenigstens einen Empfangskanals (8, 10) gegen das zu messende Medium und zum Aus- bzw. Einkoppeln der Lichtwellen ein gemeinsames Fenster (12) aus einem optisch transparenten Material vorgesehen ist und wobei die dem Empfangskanal (8, 10) zugewandte innere Grenzfläche (16) des Fensters (12) an ein Medium mit niedrigerem optischen Brechungsindex als das Fenstermaterial angrenzt,
**dadurch gekennzeichnet,**
**dass** das Fenster (12) einen Abschnitt (26) aufweist, der senkrecht zur ersten Achse (20) verläuft, so dass die Lichtwellen ohne Richtungsänderung entlang der ersten Achse (20) in das Innere des Fensters (12) eintreten, und dass die innere Grenzfläche (16) und die an das zu messende Medium unmittelbar angrenzende äußere Grenzfläche (14) des Fensters (12) und die erste Achse (20) so angeordnet sind, dass an der äußeren Grenzfläche (14) in das Innere des Fensters (12) zurückreflektierte Lichtwellen (T-TR) des Sendekanals (6) unter einem Einfallswinkel (α₂) auf die innere Grenzfläche (16) auftreffen, der größer ist als der Grenzwinkel der Totalreflektion, so dass sie nicht in den Empfangskanal (8, 10) gelangen sondern erneut reflektiert werden.

2. Sensor nach Anspruch 1, **dadurch gekennzeichnet, dass** die erste Achse (20) bezüglich der äußeren Grenzfläche (14) derart orientiert ist, dass die Lichtwellen unter einem Winkel (α₁) zwischen 45 und 55 Grad zur Lotrechten (22) auf die äußere Grenzfläche (14) auftreffen.

3. Sensor nach einem der Ansprüche 1 oder 2, **dadurch gekennzeichnet, dass** die erste Achse (20) bezüglich der äußeren Grenzfläche (14) derart orientiert ist, dass der Einfallswinkel (α₂), unter dem an der äußeren Grenzfläche (14) in das Innere des Fensters (12) zurückreflektierte Lichtwellen auf die innere Grenzfläche (16) auftreffen, größer als 42 Grad ist.

4. Sensor nach einem der vorstehenden Ansprüche, **dadurch gekennzeichnet, dass** der Einfallswinkel (α₃), unter dem Lichtwellen, die durch Wechselwirkung mit dem zu messenden Medium in das Fenster (12) eintreten, auf die innere Grenzfläche (16) auftreffen, kleiner als 40 Grad, vorzugsweise kleiner als 34 Grad ist.

5. Sensor nach einem der vorstehenden Ansprüche, **dadurch gekennzeichnet, dass** das optisch dünnere Medium an der inneren Grenzfläche (16) des Fensters ein Gas, insbesondere Luft ist.

6. Sensor nach einem der vorstehenden Ansprüche, **dadurch gekennzeichnet, dass** das optisch transparente Material des Fensters (12) ein Glasmaterial ist.

7. Sensor nach einem der vorstehenden Ansprüche, **dadurch gekennzeichnet, dass** das Fenster (12) eine planparallele Platte aus dem optisch transparenten Material umfasst.

8. Verfahren zum Betreiben eines optoelektronischen Sensors, insbesondere zur Messung der Trübung in einem Medium, wobei Lichtwellen mittels eines Sendekanals in das zu messende Medium ausgesandt und mit dem Medium wechselwirkende Lichtwellen erfasst werden, wobei die Lichtwellen durch ein Fenster aus einem optisch transparenten Material hindurch in das zu messende Medium gesandt werden, **dadurch gekennzeichnet, dass** die Lichtwellen über den Sendekanal (6) entlang einer ersten Achse (20) umlenkungsfrei in das Fenster (12) eingeleitet werden und dass die Ausbreitungsrichtung der Lichtwellen innerhalb des Fensters (12) entlang der ersten Achse (20) so gewählt wird, dass an der äußeren Grenzfläche (14) des Fensters (12) nach innen reflektierte Lichtwellen unter einem Winkel auf die innere Grenzfläche (16) des Fensters auftreffen, der größer ist als der Grenzwinkel der Totalreflektion und dass nach Wechselwirkung mit dem zu messenden Medium in das Innere des Fensters (12) eingeleitete Lichtwellen unter einem Winkel auf die innere Grenzfläche (16) des Fensters (12) auftreffen, der kleiner ist als der Grenzwinkel der Totalreflektion.

## Claims

1. Opto-electronic sensor, particularly for opacity testing in a medium, having a send channel (6) for emitting light waves along a first axis (20) and at least one receive channel (8, 10), which detects the interaction of light waves with the medium and which works together with an evaluating processor unit, whereby a window (12) of optically transparent material is provided to seal off the send channel (6) and at least one receive channel (8, 10) from the medium to be measured and to decouple or input the light waves, whereby the inner interface (16) facing the receive channel (8, 10) of the window (12) adjoins a medium with a lower optical index of refraction than the window material, **characterised in that**
this window (12) exhibits a section (26) that runs perpendicularly to the first axis (20) so that the light waves enter into the interior of the window (12) along the first axis (20) without changing direction, and that the inner interface (16), as well as the outer interface (14) of the window (12) immediately adjoining the medium to be measured and the first axis (20) are positioned so that the light waves (T-TR) of the send channel (6) which are reflected back into the interior of the window (12) impinge on to the inner interface (16) with an angle of incidence (α₂) that is greater than the critical angle of total internal reflection, and they consequently do not find their way into the receive channel (8, 10), but are once again reflected.

2. Sensor according to claim 1, **characterised in that** the first axis (20) is orientated with respect to the outer interface (14) so that the light waves impinge on to the outer interface (14) at an angle of between 45 and 55 degrees to the perpendicular (22).

3. Sensor according to either of claims 1 or 2, **characterised in that** the first axis (20) is orientated in such as way with respect to the outer interface (14) that the angle of incidence (α₂) of the light waves, which are reflected back at the outer interface (14) into the interior of the window (12) and impinge on the inner interface (16), is greater than 42 degrees.

4. Sensor according to any one of the aforesaid claims, **characterised in that** the angle of incidence (α₂) with which the light waves impinge on the inner interface (16), following interaction with the medium to be measured and entry into the window (12), is smaller than 40 degrees, and is preferably smaller than 34 degrees.

5. Sensor according to any one of the preceding claims, **characterised in that** the optically thinner medium at the inner interface (16) of the window is a gas, and is, more particularly, air.

6. Sensor according to any one of the preceding claims, **characterised in that** the optically transparent material of the window (12) is a glass material.

7. Sensor according to any one of the preceding claims, **characterised in that** the window (12) comprises a coplanar disc of the optically transparent material.

8. Method of operating an opto-electronic sensor, particularly in the testing of opacity in a medium, whereby light waves are emitted into the medium to be tested by means of a send channel and are detected with the light waves interacting with the medium, whereby the light waves are passed through a window of transparent material and into the medium to be tested, **characterised in that** the light waves are directed along a first axis (20) into the window (12) via the send channel (6) without deflection and that the direction of dispersion of the light waves along the first axis (20) within the window (12) is selected so that the light waves impinge on the inner interface (16) of the window (12), following inward reflection at the outer interface (14) of the window (12), at an angle that is greater than the critical angle of total reflection and that, after interaction with the medium to be tested, the light waves directed into the interior of the window (12) impinge on the inner interface (16) of the window (12) at an angle that is smaller than the critical angle of total reflection.

## Revendications

1. Capteur optoélectronique, en particulier pour mesurer la turbidité dans un fluide, comportant un canal émetteur (6) émettant des ondes lumineuses le long d'un premier axe (20) et au moins un canal récepteur (8, 10) qui capte les ondes lumineuses en interaction avec le fluide et fonctionne en coopération avec une unité d'évaluation, une fenêtre commune (12) constituée d'un matériau optiquement transparent étant prévue pour l'étanchéité du canal émetteur (6) et du au moins un canal récepteur (8, 10) au fluide à mesurer et pour le couplage et/ou découplage des ondes 1, et la surface de séparation intérieure (16) tournée vers le canal récepteur (8, 10) étant adjacente à un fluide présentant un indice de réfraction optique inférieur à celui du matériau de la fenêtre,
**caractérisé en ce que**
la fenêtre (12) présente une section (26) qui passe à la perpendiculaire du premier axe (20), de sorte que les ondes lumineuses entrent à l'intérieur de la fenêtre (12) sans changement de direction le long du premier axe (20), et **en ce que** la surface de séparation intérieure (16) et la surface de séparation extérieure (14) immédiatement adjacente au fluide à mesurer de la fenêtre (12) et le premier axe (20) sont disposés de façon que les ondes lumineuses (T-TR) du canal émetteur (6) répercutées contre la surface de séparation extérieure (14) à l'intérieur de la fenêtre (12) atteignent la surface de séparation intérieure (16) selon un angle d'incidence (α₂) plus grand que l'angle critique de la réflexion totale, de sorte qu'elles n'arrivent pas dans le canal récepteur (8, 10) mais sont à nouveau réfléchies.

2. Capteur selon la revendication 1, **caractérisé en ce que** le premier axe (20) est orienté par rapport à la surface de séparation extérieure (14) de façon que les ondes lumineuses atteignent la surface de séparation extérieure (14) selon un angle (α₁) de 45 à 55 degrés par rapport à la verticale (22).

3. Capteur selon l'une des revendications 1 ou 2, **caractérisé en ce que** le premier axe (20) est orienté par rapport à la surface de séparation extérieure (14) de façon que l'angle d'incidence (α₂) selon lequel les ondes lumineuses répercutées contre la surface de séparation extérieure (14) à l'intérieur de la fenêtre (12) atteignent la surface de séparation intérieure (16) soit supérieur à 42 degrés.

4. Capteur selon l'une des revendications précédentes, **caractérisé en ce que** l'angle d'incidence (α₃) selon lequel les ondes lumineuses qui entrent dans la fenêtre (12) en interaction avec le fluide à mesurer atteignent la surface de séparation intérieure (14) est inférieur à 40 degrés, de préférence inférieur à 34 degrés.

5. Capteur selon l'une des revendications précédentes, **caractérisé en ce que** le fluide optiquement mince sur la surface de séparation intérieure (16) de la fenêtre est un gaz, en particulier de l'air.

6. Capteur selon l'une des revendications précédentes, **caractérisé en ce que** le matériau optiquement transparent de la fenêtre (12) est un matériau à base de verre.

7. Capteur selon l'une des revendications précédentes, **caractérisé en ce que** la fenêtre (12) comprend une plaque à faces planes et parallèles constituée du matériau optiquement transparent.

8. Procédé pour l'utilisation d'un capteur optoélectronique, en particulier pour mesurer la turbidité dans un fluide, des ondes lumineuses étant envoyées dans le fluide à mesurer au moyen d'un canal émetteur et les ondes lumineuses interagissant avec le fluide étant captées, les ondes lumineuses étant envoyées dans le fluide à mesurer en traversant une fenêtre constituée d'un matériau optiquement transparent, **caractérisé en ce que** les ondes lumineuses sont introduites dans la fenêtre (12) par l'intermédiaire du canal émetteur (6) le long d'un premier axe (20) sans changement de direction, et **en ce que** le sens de propagation des ondes lumineuses à l'intérieur de la fenêtre (12) le long du premier axe (20) est choisi de façon que les ondes lumineuses réfléchies vers l'intérieur contre la surface de séparation extérieure (14) de la fenêtre (12) atteignent la surface de séparation intérieure (16) de la fenêtre (12) selon un angle qui est plus grand que l'angle critique de la réflexion totale et de façon que les ondes lumineuses introduites à l'intérieur de la fenêtre (12) après interaction avec le fluide à mesurer atteignent la surface de séparation intérieure (16) de la fenêtre (12) selon un angle qui est plus petit que l'angle critique de la réflexion totale.
